# FASCICULE DE BREVET EUROPEEN

(11) **EP 2 521 866 B1**
(45) Date de publication et mention de la délivrance du brevet: **12.04.2017**
(21) Numéro de dépôt: 11706296.8
(22) Date de dépôt: 07.01.2011
(51) Int. Cl.: F16D 13/64

(54) **DISQUE D'EMBRAYAGE ET GARNITURE DE FRICTION COMPORTANT UN MATERIAU DE FRICTION D'INERTIE REDUITE COLLE SUR UN CLINQUANT**
KUPPLUNGSSCHEIBE UND REIBUNGSAUSKLEIDUNG MIT AN EINER FOLIE HAFTENDEM REIBUNGSMATERIAL MIT VERRINGERTER TRÄGHEIT
CLUTCH DISC AND FRICTION LINING COMPRISING A REDUCED-INERTIA FRICTION MATERIAL ADHERED TO A FOIL

(30) Priorité: 07.01.2010 FR 1050073
(43) Date de publication de la demande: 14.11.2012
(73) Titulaire: Valeo Matériaux de Friction, 87020 Limoges (FR)
(72) Inventeur: ADAMCZAK, Loïc, F-87140 Roussac (FR); VATIN, Géraud, F-87570 Rilhac Rancon (FR); MORPAIN, Matthieu, F-87000 Limoges (FR); CHATRAS, Jean-Jacques, F-87110 Le Vigen (FR); EUSTACHE, Patrick, F-87100 Limoges (FR)
(74) Mandataire: Jeuland, Mickaël
(86) Numéro de dépôt international: PCT/FR2011/050025
(87) Numéro de publication internationale: WO 2011/083280

(56) Documents cités:
- EP-A2- 0 252 583
- DE-C1- 19 529 073
- FR-A1- 2 581 723
- FR-A1- 2 583 482
- FR-A1- 2 849 126
- GB-A- 2 170 871
- US-A- 4 967 892

## Description

L'invention concerne un disque d'embrayage et une garniture de friction comportant un matériau de friction d'inertie réduite collé sur un clinquant.

L'invention concerne plus particulièrement une garniture de friction pour un disque d'embrayage, ladite garniture comportant au moins, autour d'un axe de rotation s'étendant selon la direction axiale, un matériau de friction comportant respectivement une face de friction et une face de fixation, ledit matériau étant lié en rotation à un clinquant comportant une face proximale fixée par collage avec la face de fixation du matériau de friction.

On connaît de nombreux exemples de garnitures de friction de ce type pour un disque d'embrayage.

Le document FR-1.304.067 décrit et représente un disque d'embrayage comportant des garnitures de friction du type décrit précédemment, c'est-à-dire respectivement formée chacune d'un matériau de friction collée sur un clinquant.

Une telle garniture de friction présente l'inconvénient du fait de l'adjonction du clinquant au matériau de friction de présenter une inertie supérieure à une garniture de friction conventionnelle dépourvue d'un tel clinquant.

Afin de résoudre ce problème d'inertie, le document FR 2 581 723 enseigne de ménager des évidements dans la face de fixation de la garniture. Toutefois, la garniture de friction décrite dans ce document ne permet ni d'assurer une coefficient de frottement important tout au long de sa durée de vie, ni une détection de la limite d'usure. Le document FR2583482 A1 représente l'état de la technique le plus proche et décrit l'introduction de la revendication 1.

Le but de la présente invention est notamment de remédier à ces inconvénients en proposant une garniture de friction qui présente une inertie réduite et permette en outre une gestion de l'usure de la garniture, telle que définit dans la revendication 1.

Dans ce but, l'invention propose que la garniture de friction comporte au moins un évidement qui, agencé axialement entre la face de friction du matériau et la face proximale du clinquant, est réalisé dans le matériau de friction de manière à réduire l'inertie totale de la garniture de friction et que ledit au moins un évidement présente une profondeur (p) qui est supérieure à l'épaisseur (e) de la tête d'un rivet de fixation de la garniture.

Grâce à un tel évidement, on réduit l'inertie totale de la garniture de friction en compensant celle imputable au clinquant. En outre, l'évidement présentant une profondeur supérieure à l'épaisseur de la tête du rivet et s'étendant axialement au-delà de l'extrémité de celle-ci, il est apte à constituer un témoin d'usure du matériau de friction de la garniture avant d'atteindre sa capacité d'usure maximale.

De plus, selon une caractéristique avantageuse de l'invention, l'évidement peut constituer des rainures qui débouchent sur la face de friction de la garniture lorsque la garniture s'use afin de compenser la diminution de hauteur de rainures initialement formées sur la face frottante, ceci afin d'assurer un bon coefficient de frottement malgré l'usure de la garniture.

En effet, selon un mode de réalisation avantageux, le matériau de friction comporte des premières rainures circonférentielles et/ou radiales ménagées sur sa face de friction et une pluralité d'évidements agencés axialement entre la face de friction du matériau et la face proximale du clinquant et constituant des secondes rainures circonférentielles et/ou radiales s'étendant axialement au-delà du fond des premières rainures.

Avantageusement, les premières et les secondes rainures présentent des surfaces et des géométries sensiblement identiques de manière à limiter les variations de coefficient de frottement tout au long de la durée de vie de la garniture.

Selon d'autres caractéristiques de l'invention :
- l'évidement débouche au moins dans la face de fixation du matériau de friction ;
- l'évidement comporte au moins deux perçages borgnes débouchant dans la face de fixation du matériau de friction et répartis angulairement de manière régulière autour de l'axe de rotation s'étendant suivant la direction axiale ;
- l'évidement comporte au moins un perçage qui est cylindrique ou tronconique ;
- l'évidement comporte au moins une gorge s'étendant angulairement en totalité sur la face de fixation du matériau de friction ;
- l'évidement comporte au moins une gorge qui est annulaire ;
- l'évidement comporte au moins une gorge qui présente une section à bords parallèles ou une section trapézoïdale ;
- l'évidement est réalisé dans un élément rapporté qui est interposé axialement entre le matériau de friction et le clinquant ;
- la garniture de friction comporte au moins un évidement d'une profondeur qui est au moins supérieure à l'épaisseur de la tête d'un rivet de fixation de la garniture de manière que ledit évidement constitue un témoin d'usure du matériau de friction qui débouche dans la face de friction du matériau de friction lorsque le matériau de friction de la garniture atteint une épaisseur correspondant à la profondeur de l'évidement.

L'invention propose également un disque d'embrayage pour un embrayage à friction de véhicule automobile, comportant un moyeu axial lié à un flasque transversal de support comportant un ensemble d'éléments de support transversaux qui sont déformables élastiquement selon la direction axiale défini par un axe de rotation, caractérisé en ce que le disque d'embrayage comporte des garnitures de friction selon l'invention et en ce que lesdites garnitures de friction sont fixées axialement de part et d'autre de l'ensemble d'éléments par l'intermédiaire des rivets de fixation.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective éclatée d'un disque d'embrayage comportant des garnitures de friction selon l'invention,
- la figure 2 est une vue de face du seul matériau de friction de la garniture, sans clinquant, afin d'illustrer des premier et deuxième modes de réalisation de l'invention,
- la figure 3 est une vue de face du seul matériau de friction de la garniture, sans clinquant, afin d'illustrer des troisième et quatrième modes de réalisation de l'invention,
- la figure 4 est une vue de détail en coupe d'une garniture de friction selon les premier et troisième modes de réalisation de l'invention,
- la figure 5 est une vue de détail en coupe d'une garniture de friction selon les deuxième et quatrième modes de réalisation de l'invention,
- la figure 6 est une vue en coupe d'un disque de friction selon un cinquième mode de réalisation de l'invention,
- la figure 7 est une vue en perspective isométrique d'une garniture de friction selon un sixième mode de réalisation de l'invention, et
- la figure 8 est une vue de détail en coupe d'une garniture de friction selon un septième mode de réalisation de l'invention.

Dans la description qui va suivre, des chiffres de référence identiques désignent des pièces identiques ou ayant des fonctions similaires.

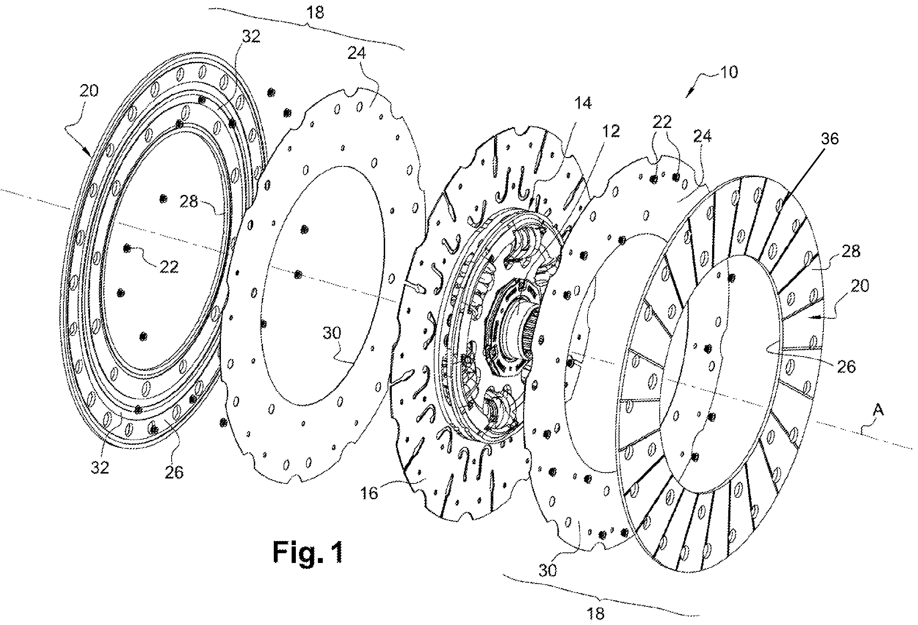

On a représenté à la figure 1 un disque 10 d'embrayage pour un embrayage à friction de véhicule automobile.

Le disque 10 d'embrayage est notamment destiné à être associé à un volant moteur (non représenté) d'un véhicule automobile et à être sollicité par un mécanisme à diaphragme, lui-même commandé par une butée (non représentée).

De manière connue, le disque 10 comporte un moyeu 12 axial qui est lié à un flasque 14 transversal de support comportant un ensemble d'éléments 16 de support transversaux déformables élastiquement selon la direction axiale.

Ces éléments 16 de support, par exemple des pales, supportent des garnitures 18 de friction annulaires qui sont fixées axialement de part et d'autre de l'ensemble d'éléments 16 de support par l'intermédiaire de rivets 22 de fixation.

Chaque garniture 18 comporte au moins, autour d'un axe A de rotation s'étendant selon la direction axiale, un matériau 20 de friction comportant respectivement une face 28 de friction et une face 26 de fixation, ledit matériau 20 étant lié en rotation à un clinquant 24 comportant une face 30 proximale fixée par collage avec la face 26 de fixation du matériau 20 de friction

De manière connue, un tel clinquant 24 annulaire, c'est-à-dire une feuille de matériau métallique mince, est interposé entre chaque élément 16 de support et le matériau 20 de friction de la garniture 18 annulaire de friction correspondant.

Plus particulièrement, la face 26 de fixation du matériau 20 de friction de la garniture 18, opposée à la face 28 libre de friction de la garniture 18 est collée sur la face 30 proximale du clinquant 24, pour éviter l'incrustation dudit élément 16 de support dans ledit matériau 20 de friction de la garniture 18.

Dans une telle garniture 18 de friction, l'inertie totale de l'ensemble correspond à l'inertie de ses éléments constitutifs à savoir le matériau 20 de friction et le clinquant 24, chacun présentant une inertie déterminée.

Or, on recherche précisément à disposer d'une garniture 18 de friction pour un disque 10 d'embrayage qui présente une inertie minimale afin d'éviter la transmission d'à-coups lors des phases de ré-embrayage.

C'est la raison pour laquelle, il importe de réduire l'inertie totale d'une telle garniture 18 de friction comme celle d'un disque équipé de telles garnitures 18 de manière à ce que leur inertie ne dépasse notamment pas l'inertie d'une garniture 18 de friction ou d'un disque 10 conventionnel.

Dans ce but, l'invention propose une garniture 18 de friction comporte au moins un évidement 32 qui est agencé axialement entre la face 28 de friction du matériau 20 et la face 30 proximale du clinquant 24 et qui est réalisé dans le matériau 20 de friction de manière à réduire l'inertie totale de la garniture 18 de friction.

Avantageusement, l'invention propose encore un disque 10 d'embrayage pour un embrayage à friction de véhicule automobile, comportant des garnitures 18 de friction selon l'invention qui sont fixées axialement de part et d'autre de l'ensemble d'éléments 16 de support par l'intermédiaire des rivets 22 de fixation.

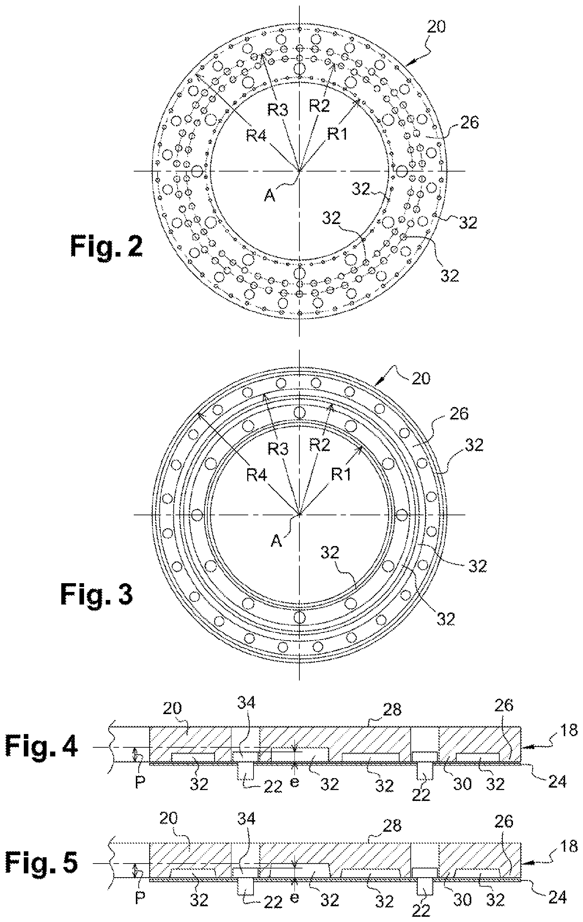

Dans le mode de réalisation préféré de l'invention, comme l'illustrent les figures 4 et 5, l'évidement 32 débouche au moins dans la face 26 de fixation du matériau 20 de friction de la garniture 18.

Cette configuration permet d'une part de réaliser de manière aisée l'évidement 32 à partir de la face 26 de fixation du matériau 20 de friction de la garniture 18 et d'autre part de ne pas affaiblir outre mesure la résistance de la face 28 libre de friction du matériau 20 de friction de la garniture 18 de friction.

Plusieurs modes de réalisation de l'évidement 32 peuvent être envisagés et des exemples de modes de réalisation seront décrits ci-après de manière non limitative.

En premier lieu, comme l'illustre la figure 2, selon des premier et deuxième modes de réalisation de l'invention, l'évidement 32 comporte au moins deux perçages borgnes 32 débouchant dans la face 26 de fixation du matériau 20 de friction de la garniture 18 de friction et répartis angulairement de manière régulière autour de la direction axiale "A". Cette configuration permet avantageusement d'assurer un équilibrage satisfaisant de la garniture 18.

Ainsi sur la figure 2, on a représenté le matériau 20 de friction d'une garniture 18 comportant des évidements 32 sous forme de perçages borgnes qui sont répartis suivant quatre rayons R1, R2, R3 et R4 différents.

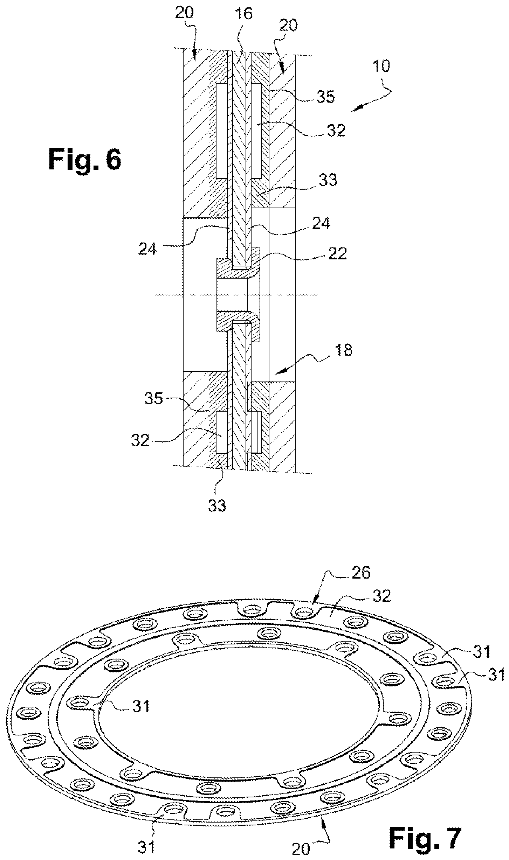

En variante, comme l'illustre la figure 3 selon des troisième et quatrième modes de réalisation de l'invention, ou comme l'illustre la figure 6 selon un sixième mode de réalisation de l'invention, l'évidement 32 comporte au moins une gorge s'étendant angulairement en totalité sur la face 26 de fixation du matériau 20 de friction de la garniture 18.

Dans les troisième et quatrième modes de réalisation de l'invention, la gorge formant l'évidement 32 est annulaire, c'est-à-dire que sa ligne moyenne est un cercle.

Ainsi sur la figure 3, on a représenté le matériau 20 de friction d'une garniture 18 de friction comportant des évidements 32 sous forme de gorges réparties suivant quatre rayons R1, R2, R3 et R4 différents.

L'évidement 32 sous forme de gorge pourrait être agencée selon un rayon variable à partir de la direction axiale, par exemple en serpentant de part et d'autre des rivets 22 de fixation de la garniture 18 aux éléments 16 du flasque 14, ou tout autre forme s'étendant angulairement en totalité sur la face 26 de fixation du matériau 20 de friction de la garniture 18, et de préférence selon une symétrie axiale, pour favoriser l'équilibrage de la garniture 18.

Dans le sixième mode de réalisation de l'invention, l'évidement 32 sous forme de gorge consiste en un évidement 32 maximal de la face 26 de fixation du matériau 20 de friction de la garniture 18.

Avantageusement, cet évidement ne laisse subsister sur la face 26 de fixation que des surfaces 31 d'appui nécessaires au collage du matériau 20 de friction sur le clinquant 24 et au rivetage de la garniture 18 de friction avec les éléments 16 de support du flaque 14 du disque 10 d'embrayage.

Une caractéristique particulièrement innovante de l'invention est qu'au moins un évidement 32 est d'une profondeur "p" qui est supérieure à l'épaisseur "e" d'une tête 34 d'un rivet 22 de fixation lorsque, comme l'illustre par exemple la figure 4, la tête 34 du rivet 22 est en appui directement sur la face 30 proximale du clinquant 24.

On entend ici par profondeur p de l'évidement 32, la distance séparant le fond de l'évidement 32 de la face 30 proximale du clinquant 24.

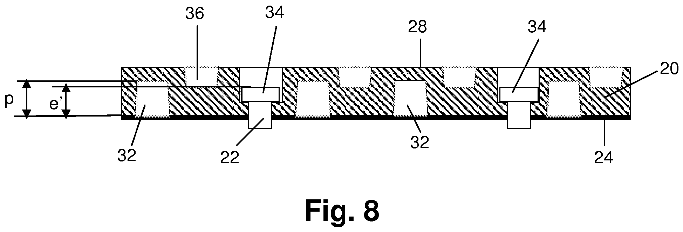

En variante représentée sur la figure 8, le matériau 20 de friction de la garniture 18 comporte pour le passage de la tête 34 de chaque rivet 22 un perçage qui ne débouche pas dans la face 26 de fixation du matériau 20 au clinquant 24 de sorte que la tête 34 du rivet 22 est alors en appui au fond dudit perçage sur un lamage et qu'une épaisseur déterminée de matériau 20 de friction est alors interposée axialement entre la tête 34 et la face 30 proximale du clinquant 24.

Ainsi, le matériau 20 de friction de la garniture 18 comporte au moins un évidement 32 d'une profondeur "p" qui est au moins supérieure à l'épaisseur "e" de la tête 34 d'un rivet 22 de fixation de la garniture 18.

En effet, selon ladite variante représentée sur la figure 8, la profondeur "p" est alors supérieure à au moins l'épaisseur "e" de la tête 34 augmentée de l'épaisseur du matériau 20 de friction compris axialement entre la tête 34 et la face 30 proximale du clinquant 24. La profondeur « p » est ainsi supérieure à l'épaisseur « e' », représentée sur la figure 8, égale à la somme de l'épaisseur « e » de la tête 34 et de l'épaisseur du matériau de friction compris axialement entre la tête 34 et la face proximale du clinquant 24.

En d'autres termes, l'évidement 32 s'étend axialement au-delà de l'extrémité de la tête 34 du rivet 22.

Selon un aspect de l'invention, cette configuration permet avantageusement à l'évidement 32 de constituer un témoin d'usure du matériau 20 de friction de la garniture 18.

En effet, dès lors que le matériau 20 de friction de la garniture 18 a atteint une épaisseur correspondant à la profondeur "p" de l'évidement 32, l'évidement 32 débouche alors dans la face 28 de friction du matériau 20 de friction de la garniture 18.

Les parois de l'évidement 32 peuvent aussi faire l'objet de différents modes de réalisation.

Comme l'illustre la figure 4, qui représente un évidement 32 correspondant à un perçage ou à une gorge, le perçage peut être cylindrique ou la gorge peut présenter une section à bords parallèles.

En variante, comme l'illustre la figure 5, le perçage peut être tronconique ou la gorge peut présenter une section trapézoïdale.

Cette dernière configuration présente tout son intérêt lorsque l'évidement 32 est d'une profondeur "p" qui est supérieure à l'épaisseur "e" d'une tête 34 d'un rivet 22 de fixation.

En effet, dans ce dernier cas, la partie de l'évidement 32 débouche dans la face 28 de friction du matériau 20 de friction de la garniture 18 lorsque le matériau 20 de friction est suffisamment usée pour atteindre une épaisseur correspondant à la profondeur "p" de l'évidement 32, va aller en s'élargissant à mesure que l'usure s'accentuera.

On peut donc de cette manière disposer d'un témoin d'usure de la garniture 18 et plus particulièrement permettant d'estimer le degré d'usure du matériau 20 de friction de la garniture 18.

En variante, l'évidement 32 peut être réalisé dans un élément rapporté 33 qui est agencé dans un logement 35 du matériau 20 de friction de la garniture 18.

Comme l'illustre la figure 6, cet élément rapporté 33 peut être réalisé dans un matériau différent de celui du matériau 20 de friction de la garniture 18 de friction, notamment pour la renforcer à proximité de l'évidement 32.

Dans ce cas la garniture 18 de friction est dite "bi-matière" du fait qu'elle comporte, outre le clinquant 24, une première partie formée par le matériau 20 de friction et une deuxième partie formée par ledit élément 33 rapporté.

Avantageusement, l'élément 33 rapporté est intercalé axialement entre la face 30 proximale du clinquant 24 et la face en vis-à-vis du matériau 20 de friction auquel ledit élément 33 est respectivement fixé par collage.

Par ailleurs, selon une variante avantageuse, la garniture 18 de friction est pourvue de rainures 36 ménagées sur la face de friction 28 de la garniture 20. Ces rainures 36 peuvent être radiales (voir figure 1) et/ou circonférentielles (voir figure 8). Les rainures radiales permettent d'éliminer les éventuelles pollutions (graisses huiles) qui pourraient se retrouver sur les surfaces de friction et aident en outre à chasser les débris d'usures afin d'éviter des grippages.

Les rainures axiales et circonférentielles 36 apportent également une souplesse au disque d'embrayage auquel la garniture est fixée, améliorant ainsi le rattrapage des jeux et réduisant au minimum les vibrations et les bruits d'embrayage. Enfin, ces rainures 36 assurent également un refroidissement des zones de frottement permettant d'obtenir un coefficient de frottement élevé.

Dans le mode de réalisation représenté sur la figure 8, les évidements 32 agencés axialement entre la face 28 de friction et le clinquant 24 sont décalés par rapport aux premières rainures et forment des secondes rainures s'étendant axialement au-delà du fond des premières rainures 36. En d'autres termes, le fond des secondes rainures 32 est situé à une distance axiale de la surface de friction 28 inférieure à la profondeur des premières rainures 36.

Ainsi, la garniture présente des rainures sur l'intégralité de sa durée de vie car les secondes rainures 32 prennent le relais des premières rainures 36 avant que l'usure ne les ait intégralement estompées.

Ainsi, lorsque la garniture s'use, la hauteur des premières rainures 36 diminuent et leur effet bénéfique sur le coefficient de frottement diminue. Dès lors que l'usure atteint les secondes rainures, le coefficient de frottement revient alors à un état proche de son état initial.

De manière avantageuse, chacune des premières 36 et secondes 32 rainures présentent des formes et des surfaces sensiblement similaires de manière à limiter les variations des caractéristiques de frottement au cours de la durée de vie de la garniture.

Par ailleurs, on note qu'une telle garniture 20 peut aux choix comprendre des premières et secondes rainures radiales, des premières et secondes rainures circonférentielles ou la combinaison de ces deux types de rainures.On note également que cet aspect de l'invention est particulièrement avantageux dans la mesure où il n'est pas possible de réaliser des garnitures monobloc comportant des rainures traversant l'épaisseur de la garniture.

L'invention propose donc une garniture de friction pour un disque d'embrayage présentant une inertie réduite, apte à résister aux phénomènes d'incrustation grâce au clinquant qu'elle comporte et permettant une détection de l'usure et/ou limitant la dégradation du coefficient de frottement liée à l'usure.

## Revendications

1. Garniture (18) de friction pour un disque (10) d'embrayage, ladite garniture (18) comportant au moins, autour d'un axe (A) de rotation s'étendant selon la direction axiale, un matériau (20) de friction comportant respectivement une face (28) de friction et une face (26) de fixation, ledit matériau (20) étant lié en rotation à un clinquant (24) comportant une face (30) proximale fixée par collage avec la face (26) de fixation du matériau (20) de friction, ladite garniture (18) de friction comportant au moins un évidement (32) qui, agencé axialement entre la face (28) de friction du matériau (20) et la face (30) proximale du clinquant (24), est réalisé dans le matériau (20) de friction de manière à réduire l'inertie totale de la garniture (18) de friction, ladite garniture (18) étant **caractérisée en ce que** ledit au moins un évidement (32) comportant un fond et présente une profondeur (p), définie par la distance séparant le fond de l'évidement (32) de la face proximale du clinquant (24), qui est supérieure à l'épaisseur (e) de la tête (34) d'un rivet (22) de fixation de la garniture (18) et dans lequel l'évidement (32) s'étend axialement au-delà de l'extrémité de la tête (34) du rivet (22).

2. Garniture (18) de friction selon la revendication 1, **caractérisée en ce que** le matériau de friction (20) comporte des premières rainures (36) circonférentielles et/ou radiales ménagées sur sa face de friction (28) et une pluralité d'évidements (20) agencés axialement entre la face (28) de friction du matériau (20) et la face (30) proximale du clinquant (24) et constituant des secondes rainures circonférentielles et/ou radiales s'étendant axialement au-delà du fond des premières rainures (36).

3. Garniture (18) de friction selon la revendication 2, **caractérisé en ce que** les premières et les secondes rainures présentent des surfaces et des géométries sensiblement identiques.

4. Garniture (18) de friction selon la revendication 1 ou 2, **caractérisée en ce que** l'évidement (32) débouche au moins dans la face (26) de fixation du matériau (20) de friction.

5. Garniture (18) de friction selon la revendication 4, **caractérisée en ce qu'**elle comporte des évidements (32) sous forme d'au moins deux perçages borgnes débouchant dans la face (26) de fixation du matériau (20) de friction et répartis angulairement de manière régulière autour de l'axe (A) de rotation s'étendant suivant la direction axiale.

6. Garniture (18) de friction selon la revendication 4, **caractérisée en ce qu'**elle comporte un évidement (32) sous forme d'au moins un perçage qui est cylindrique ou tronconique.

7. Garniture (18) de friction selon la revendication 4, **caractérisée en ce qu'**elle comporte un l'évidement (32) présentant la forme d'une gorge s'étendant angulairement en totalité sur la face (26) de fixation du matériau (20) de friction.

8. Garniture (18) de friction selon la revendication 4, **caractérisée en ce que** 'elle comporte un 'évidement (32) présentant la forme d'une gorge qui est annulaire.

9. Garniture (18) de friction selon la revendication 4, **caractérisée en ce qu'**elle comporte un évidement (32) présentant une forme de gorge qui présente une section à bords parallèles ou une section trapézoïdale.

10. Garniture (18) de friction selon l'une quelconque des revendications 1 à 9, **caractérisée en ce que** l'évidement (32) est réalisé dans un élément rapporté (33) qui est interposé axialement entre le matériau (20) de friction et le clinquant (24).

11. Disque (10) d'embrayage pour un embrayage à friction de véhicule automobile, comportant un moyeu (12) axial lié à un flasque (14) transversal de support comportant un ensemble d'éléments (16) de support transversaux qui sont déformables élastiquement selon la direction axiale défini par un axe (A) de rotation, **caractérisé en ce que** le disque (10) d'embrayage comporte des garnitures (18) de friction selon l'une quelconque des revendications précédentes et **en ce que** lesdites garnitures (18) de friction sont fixées axialement de part et d'autre de l'ensemble d'éléments (16) par l'intermédiaire des rivets (22) de fixation.

## Patentansprüche

1. Reibbelag (18) für eine Kupplungsscheibe (10), wobei der Belag (18) wenigstens um eine Drehachse (A) herum, die sich entlang der axialen Richtung erstreckt, ein Reibmaterial (20) umfasst, das eine Reibfläche (28) bzw. eine Befestigungsfläche (26) umfasst, wobei das Material (20) mit einer Metallfolie (24) drehfest verbunden ist, die eine proximale Fläche (30) umfasst, die durch Kleben an der Befestigungsfläche (26) des Reibmaterials (20) befestigt ist, wobei der Reibbelag (18) wenigstens eine Aussparung (32) umfasst, welche, axial zwischen der Reibfläche (28) des Materials (20) und der proximalen Fläche (30) der Metallfolie (24) angeordnet, in dem Reibmaterial (20) derart ausgebildet ist, dass sie die Gesamtträgheit des Reibbelags (18) verringert, wobei der Belag (18) **dadurch gekennzeichnet ist, dass** wobei die wenigstens eine Aussparung (32) einen Boden umfasst und eine Tiefe (p) aufweist, die durch den Abstand definiert ist, der den Boden der Aussparung (32) von der proximalen Fläche der Metallfolie (24) trennt, und die größer als die Dicke (e) des Kopfes (34) eines Niets (22) zur Befestigung des Belags (18) ist, und wobei sich die Aussparung (32) axial über das Ende des Kopfes (34) des Niets (22) hinaus erstreckt.

2. Reibbelag (18) nach Anspruch 1, **dadurch gekennzeichnet, dass** das Reibmaterial (20) erste in Umfangsrichtung verlaufende und/oder radiale Nuten (36) umfasst, die auf seiner Reibfläche (28) ausgebildet sind, und mehrere Aussparungen (20), die axial zwischen der Reibfläche (28) des Materials (20) und der proximalen Fläche (30) der Metallfolie (24) angeordnet sind und zweite in Umfangsrichtung verlaufende und/oder radiale Nuten bilden, die sich axial über den Boden der ersten Nuten (36) hinaus erstrecken.

3. Reibbelag (18) nach Anspruch 2, **dadurch gekennzeichnet, dass** die ersten und Nuten im Wesentlichen identische Flächen und Geometrien aufweisen.

4. Reibbelag (18) nach Anspruch 1 oder 2, **dadurch gekennzeichnet, dass** die Aussparung (32) wenigstens in der Befestigungsfläche (26) des Reibmaterials (20) mündet.

5. Reibbelag (18) nach Anspruch 4, **dadurch gekennzeichnet, dass** er Aussparungen (32) in Form von wenigstens zwei Sacklochbohrungen umfasst, die in der Befestigungsfläche (26) des Reibmaterials (20) münden und in gleichmäßigen Winkelabständen um die sich entlang der axialen Richtung erstreckende Drehachse (A) herum verteilt sind.

6. Reibbelag (18) nach Anspruch 4, **dadurch gekennzeichnet, dass** er eine Aussparung (32) in Form wenigstens einer Bohrung umfasst, welche zylindrisch oder kegelstumpfförmig ist.

7. Reibbelag (18) nach Anspruch 4, **dadurch gekennzeichnet, dass** er eine Aussparung (32) umfasst, welche die Form einer Auskehlung aufweist, die sich unter einem Winkel vollständig auf der Befestigungsfläche (26) des Reibmaterials (20) erstreckt.

8. Reibbelag (18) nach Anspruch 4, **dadurch gekennzeichnet, dass** er eine Aussparung (32) umfasst, welche die Form einer Auskehlung aufweist, die ringförmig ist.

9. Reibbelag (18) nach Anspruch 4, **dadurch gekennzeichnet, dass** er eine Aussparung (32) umfasst, die eine Auskehlungsform aufweist, welche einen Querschnitt mit parallelen Rändern oder einen trapezförmigen Querschnitt aufweist.

10. Reibbelag (18) nach einem der Ansprüche 1 bis 9, **dadurch gekennzeichnet, dass** die Aussparung (32) in einem Ansatzelement (33) ausgebildet ist, welches axial zwischen dem Reibmaterial (20) und der Metallfolie (24) angeordnet ist.

11. Kupplungsscheibe (10) für eine Reibungskupplung eines Kraftfahrzeugs, welche eine axiale Nabe (12) umfasst, die mit einem Querstützflansch (14) verbunden ist, der einen Satz von Querstützelementen (16) umfasst, welche in der durch eine Drehachse (A) definierten axialen Richtung elastisch verformbar sind, **dadurch gekennzeichnet, dass** die Kupplungsscheibe (10) Reibbeläge (18) nach einem der vorhergehenden Ansprüche umfasst, und dadurch, dass die Reibbeläge (18) über Befestigungsniete (22) axial beiderseits des Satzes von Elementen (16) befestigt sind.

## Claims

1. Friction lining (18) for a clutch disc (10), the said lining (18) comprising at least, about an axis (A) of rotation extending in the axial direction, a friction material (20) respectively comprising a friction face (28) and a fixing face (26), the said material (20) being connected in rotation to a foil (24) comprising a proximal face (30) fixed by adhesive bonding to the fixing face (26) of the friction material (20), the said friction lining (18) comprising at least one recess (32) which, arranged axially between the friction face (28) of the material (20) and the proximal face (30) of the foil (24), is produced in the friction material (20) so as to reduce the total inertia of the friction lining (18), the said lining (18) being **characterized in that** the said at least one recess (32) comprising a bottom and has a depth (p), defined by the distance separating the bottom of the recess (32) from the proximal face of the foil (24), which is greater than the thickness (e) of the head (34) of a rivet (22) for fixing the lining (18), and wherein the recess (32) extends axially beyond the end of the head (34) of the rivet (22).

2. Friction lining (18) according to Claim 1, **characterized in that** the friction material (20) comprises first circumferential and/or radial slots (36) made in its friction face (28) and a plurality of recesses (20) arranged axially between the friction face (28) of the material (20) and the proximal face (30) of the foil (24) and constituting second circumferential and/or radial slots extending axially beyond the bottom of the first slots (36).

3. Friction lining (18) according to Claim 2, **characterized in that** the first and second slots have substantially identical surfaces and geometries.

4. Friction lining (18) according to Claim 1 or 2, **characterized in that** the recess (32) opens at least into the fixing face (26) of the friction material (20).

5. Friction lining (18) according to Claim 4, **characterized in that** it comprises recesses (32) in the form of at least two blind apertures opening into the fixing face (26) of the friction material (20) and distributed angularly in a regular manner about the axis (A) of rotation extending in the axial direction.

6. Friction lining (18) according to Claim 4, **characterized in that** it comprises a recess (32) in the form of at least one aperture which is cylindrical or frustoconical.

7. Friction lining (18) according to Claim 4, **characterized in that** it comprises a recess (32) having the shape of a groove extending angularly wholly over the fixing face (26) of the friction material (20).

8. Friction lining (18) according to Claim 4, **characterized in that** it comprises a recess (32) having the shape of a groove which is annular.

9. Friction lining (18) according to Claim 4, **characterized in that** it comprises a recess (32) having the shape of a groove which has a cross section with parallel edges or a trapezoidal cross section.

10. Friction lining (18) according to any one of Claims 1 to 9, **characterized in that** the recess (32) is produced in an add-on element (33) which is interposed axially between the friction material (20) and the foil (24).

11. Clutch disc (10) for a friction clutch of a motor vehicle, comprising an axial hub (12) connected to a transverse support flange (14) comprising a set of transverse support elements (16) which are elastically deformable in the axial direction defined by an axis (A) of rotation, **characterized in that** the clutch disc (10) comprises friction linings (18) according to any one of the preceding claims, and **in that** the said friction linings (18) are fixed axially on either side of the set of elements (16) by means of the fixing rivets (22).
